# EUROPEAN PATENT SPECIFICATION

(11) **EP 2 257 773 B1**
(45) Date of publication and mention of the grant of the patent: **18.09.2019**
(21) Application number: 09726049.1
(22) Date of filing: 23.03.2009
(51) Int. Cl.: G01F 13/00, B28B 11/02, C04B 41/81, C04B 41/00, A23P 20/12, B28B 11/04, C04B 41/45

(54) **A DEVICE AND A METHOD FOR DISPENSING SOLID LOOSE MATERIAL**
VORRICHTUNG UND VERFAHREN ZUR AUSGABE EINES LOSEN FESTSTOFFMATERIALS
DISPOSITIF ET PROCÉDÉ DE DISTRIBUTION DE MATÉRIAU SOLIDE EN VRAC

(30) Priority: 25.03.2008 IT RE20080030
(43) Date of publication of application: 08.12.2010
(73) Proprietor: Sacmi Cooperativa Meccanici Imola Societa' Cooperativa, 40026 Imola (IT)
(72) Inventor: VALLI, Silvano, I-40027 Mordano (IT)
(74) Representative: Corradini, Corrado
(86) International application number: PCT/IB2009/000591
(87) International publication number: WO 2009/118611

(56) References cited:
- EP-A1- 0 904 831
- GB-A- 2 193 205
- JP-A- S59 139 923
- US-A1- 2004 101 619
- DATABASE WPI Week 197613, Derwent Publications Ltd., London, GB; AN 1976-C9057X, XP002540828 & SU 472 798 A1 (CONSTR MATLS RES) 15 September 1975
- DATABASE WPI Week 197949, Derwent Publications Ltd., London, GB; AN 1979-L3749B, XP002540829 & SU 652 295 A1 (BUILD STRUCT RES) 18 March 1979
- DATABASE WPI Week 198318, Derwent Publications Ltd., London, GB; AN 1983-43822K, XP002540830 & SU 939 325 A1 (KAZA FOOD IND BUR) 30 June 1982

## Description

### Technical Field

The present invention relates to a device and a method for controlled dispensing of a solid loose material in granular and/or powder form, and/or in scale form, mainly though not exclusively applied in the manufacturing of ceramic products such as tiles.

In greater detail, the device and the method of the invention are specially conceived for controlled depositing of the loose materials on the surface of ceramic materials or other products, with the aim of obtaining a design on the objects which gives rise to a decoration of the finished products.

In ceramic applications, the loose material can be atomised pastes, atomised glazes, grains, frits or similar granular materials which, on the basis of their characteristics, can be deposited on ceramic materials such as for example soft layers of ceramic material which has not yet been pressed, ceramic slabs which have been pressed but not dried, or pressed and dried slabs before they are sent on for glazing.

### Background Art

As is known, one of the decorating techniques at present very widely used involves printing heads which controlledly dispense an appropriate ceramic material, coloured or a colorant, such as to realise on the ceramic object a predetermined design or graphic effect, for example veining, a stain or a nuanced effect.

The printing heads can dispense materials in liquid phase (ceramic inks) or loose materials in granular and/or powder form, of the type described herein above.

Naturally, the printing heads which use liquid materials are technically and constructionally different with respect to those which use solid loose materials.

In particular, the printing heads of this second type generally comprise a container hopper for the loose material, on the bottom of which there are one or more discharge mouths, from which the granular and/or powder material falls by force of gravity on an underlying ceramic object to be decorated.

Each discharge mouth is closed by a mobile obturator, which is associated to relative activating means, which are destined to displace it selectively between a closed position, in which it closes the discharge mouth and prevents material from exiting, and an open position, in which it leaves the discharge mouth open, allowing dispensing of the material.

In order that the printing heads can function correctly, it is necessary to calibrate the discharge mouths very precisely. The mouths have to be sufficiently small to enable a precise dispensing of the powder material and at the same time they have to be sufficiently large in order to stop the material from blocking the mouths, thus undesiredly interrupting flow of the powder in outlet.

Further, the mobile obturators which open and close the discharge mouths must be very rapidly activatable such as to obtain an almost-instantaneous opening and a closing to prevent undesired leakage of material during the transitory moment of closing and/or insufficient dispensing of material during the transitory moment of opening.

For these reasons, the printing heads dispensing solid loose material are generally rather complicated from the constructional point of view and are thus expensive, and not always completely reliable from the functional point of view.

Known apparatuses for applying powdered material on a surface is disclosed in documents US 2004/0101619 A1, JPS59139923 A, SU 652 295 A1, GB 2 193 205 A, SU 472 798 A1 and SU 939 325 A1.

### Disclosure of Invention

An aim of the present invention is to make available a device and a method for controlled dispensing of solid loose material, in granular and/or powder and/or scale form, which obviates the above-described drawbacks in the printing heads at present used in the manufacturing of ceramic products, without excluding possible use of the device and method for dispensing solid loose material also in other industrial sectors.

A further aim of the invention is to achieve the above-mentioned objective with a solution that is simple, rational and relatively inexpensive.

The aims are attained by the characteristics of the invention as reported in independent claim 1. The dependent claims delineate preferred and/or particularly advantageous aspects of the invention.

In particular, a device is provided which comprises a container hopper for a loose material to be dispensed, which is provided with at least a discharge mouth, through which the material freely flows out of the hopper, for example purely by force of gravity.

The device further comprises a vibrating distribution element, which is located below the discharge mouth, vertically distanced therefrom by an appropriate distance, and a vibrator means for selectively vibrating the distribution element, such that the material accumulated thereon slides at least towards a falling edge of the distribution device, from which material can freely fall in order to deposit for example on an underlying ceramic material or another product.

The distribution element is inclined with respect to a hypothetical horizontal plane, such as to define a sliding direction of the material towards the at least a falling edge.

The inclination is rather slight, comprised between 0° and 10°, such that the material exiting from the discharge mouth can accumulate on the distribution element without sliding thereon by simple effect of gravity.

Thanks to this solution, the discharge mouth of the hopper does not have to be particularly precisely dimensioned, as it is sufficient that it is sufficiently large to enable the material to flow, while the correct batching is obtained by the vibration of the distribution element.

Further, the transitory moments of start-up and halting of the dispensing are more or less instantaneous, as they do not depend on relative displacements of mobile parts, but simply on the activation and deactivation of the vibrator means.

For these reasons, a better control is effectively obtained of the dispensing of the material, which further enables realising more precise and sharp designs, and thus enables higher printing quality to be obtained.

Thanks to the absence of mobile parts, the dispensing device of the invention is further constructionally very simple, and thus reliable and relatively inexpensive.

The invention makes available an apparatus for depositing loose materials on surfaces, typically on semi-finished ceramic materials, which comprises at least a dispensing device of the above-described type, and movement means which are destined to realise a relative movement, in at least a reciprocal sliding direction, between the dispensing device and an underlying surface, on which the material is to be deposited.

In this way, the relative movement and the contemporary dispensing of material on the part of the dispensing device, enable the apparatus to deposit thin continuous strips of loose material on the surface, for example in order to realise the veining effect.

In a preferred aspect of the invention, the distribution element is interposed between two lateral walls, which develop vertically over the whole distance separating the distribution element from the overlying discharge mouth of the hopper, such as laterally to contain the material accumulated on the distribution element and to guide it towards the falling edge.

The distribution element is preferably projectingly fixed to a rigid support structure from which it develops up to below the discharge mouth of the hopper. The vibrator means are directly connected to an intermediate tract of the distribution element, which is comprised between the joining point and the discharge mouth of the hopper.

The vibrator means preferably comprise an electromechanical transducer, for example a piezoelectric transducer, which can be connected to the distribution element via a resonating plate.

The distribution element can be realised by a thin metal plate, for example made of harmonic steel, and the resonating plate can be fixed on the thin metal plate, preferably orientated perpendicular to the sheet.

In this way, the dispensing device is overall very simple, economical and has a modest mass.

The container hopper comprises a plurality of discharge mouths for the loose material, which are preferably all the same and aligned to one another.

Each of the discharge mouths surmounts a relative distribution element, which distribution element is destined to be set in vibration by respective vibrator means, independent of the other vibrator means.

In this way, the device exhibits a plurality of distinct dispensing organs for the loose material which operate in different positions and can be activated independently of one another, such as to realise a vast range of designs and/or decorations.

The single distribution elements are preferably reciprocally separated by the separator walls, which are destined to laterally contain the material exiting from each discharge mouth on the relative distribution element, and guiding the material towards the relative falling edge.

The presence of the separator walls is particularly important for dispensing of granular and/or powder material when destined to realise designs or graphic signs, while it is not strictly necessary for dispensing of material in the form of scales, as scales are most used for obtaining casual graphic effect for which a high level of distribution precision is not required.

The movement means comprises a mobile carriage, which is destined to bear the dispensing device, and which is also destined to slide with respect to a fixed support plane bearing the surfaces of which the loose material is to be deposited.

This solution is usable, for example, in discontinuous pressing plants, which generally comprise loading the ceramic powders for the bases internally of the cell of a press, such as to realise a single tile at a time. The dispensing device of the invention can be installed on board the usual sliding carriages which load the base powders internally of the cell of the press.

In a preferred embodiment, the apparatus of the invention comprises a plurality of dispensing devices according to the invention, which are arranged in succession along the sliding direction defined by the movement means.

In this way, the dispensing device can act in sequence on the surface to be treated, in order to increase the range of designs and/or decorative effects that can be realised.

In particular, the container hoppers of the dispensing devices in series can be filled with loose materials having different coloration, with the aim of obtaining multi-coloured designs and/or decorations.

In this embodiment, the dispensing devices in series can be reciprocally staggered in a transversal direction to the advancement direction defined by the movement means.

In this way, each dispensing device is destined to deposit strips of coloured material on the surfaces to be treated, which strips are staggered and alternated with the strips deposited by the other dispensing device, effectively increasing the printing resolution, i.e. the definition of the designs and/or the decorations that can be reproduced.

Further characteristics and advantages of the invention will better emerge from a reading of the following description, which is provided purely by way of non-limiting example, with the aid of the figures illustrated in the accompanying figures of the drawings.

### Brief description of the Drawings

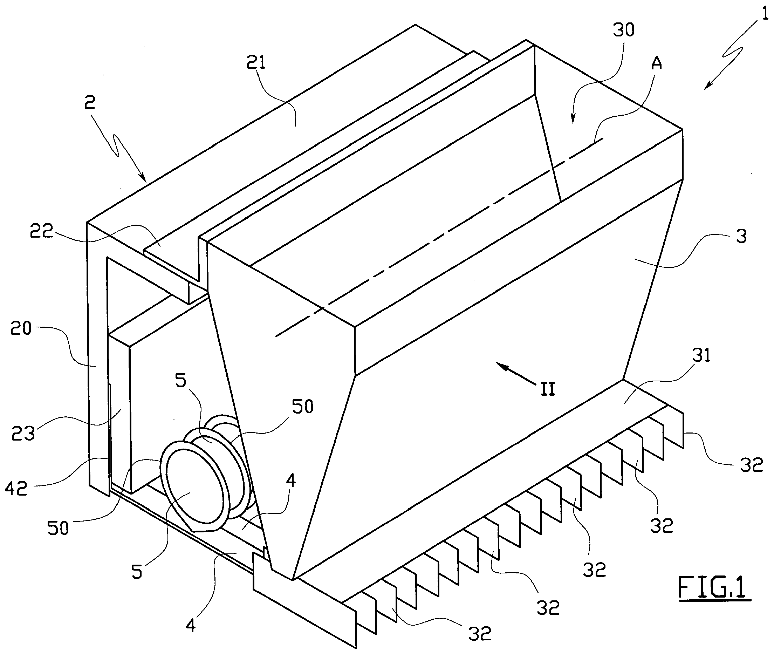

Figure 1 is a schematic view in perspective elevation of a device for dispensing loose, granular and/or powder and/or scaly material, according to the present invention.
Figure 2 is a frontal view denoted by II of the device of figure 1.
Figure 3 is the section along line III-III of figure 2.
Figure 4 is section IV-IV of figure 2 shown in enlarged scale.
Figure 5 is section V-V of figure 4 shown in enlarged scale.
Figure 6 is a perspective elevation of five alternative embodiments of the sheets of the device of figure 1.
Figure 7 is a schematic lateral view of an apparatus which does not form part of the present invention.
Figures 8 and 9 are plan views of two alternative forms of actuation of the apparatus of figure 7.
Figures 10 and 11 are the section of figure 5 relating to two alternative embodiments of the dispensing device of figure 1.
Figures 12 and 13 are plan views of two apparatus according to the invention, which respective use dispensing devices as in the embodiment of figure 10 and in that of figure 11.

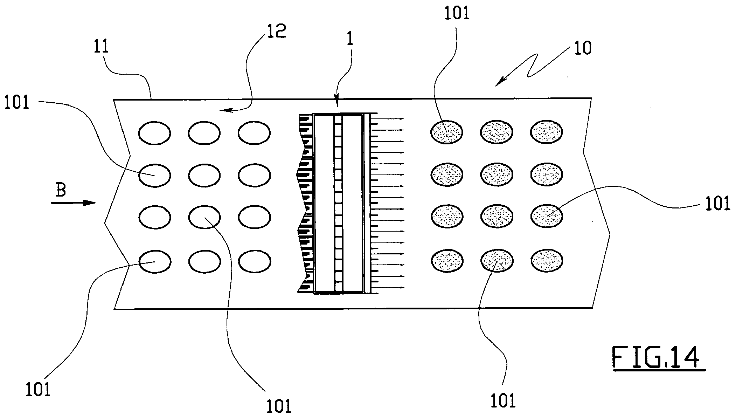

Figure 14 is a plan view of an apparatus used in the production of food products, which does not form part of the claimed invention.

### Best Mode for Carrying Out the Invention

In figures from 1 to 5 a device is illustrated for controlled dispensing of solid loose material, in granular and/or powder and/or scale form, in the manufacture of ceramic products such as tiles.

These materials can be for example atomised pastes, atomised glazes, grains, frits or other similar solid loose materials, which are generally used for surface decoration of ceramic materials.

The dispensing device 1 comprises a support structure, denoted in its entirety by 2, which comprises a first L-shaped element which provides a vertical upright 20 and an upper projecting shelf 21, and a second L-shaped element, denoted by 22, which rigidly connects the projecting shelf 21 to a container hopper 3, which is filled with the loose material to be dispensed. Naturally the above-described support structure 2 is provided purely by way of example.

The container hopper 3 develops prevalently according to a horizontal transversal axis A, with respect to which it exhibits a constant transversal section, substantially trapezoid, which tapers in a downwards direction.

In this way, the top of the container hopper 3 comprises a large rectangular inlet opening 30, through which the loose material is loaded, while the bottom of the hopper 3 comprises a thin outlet slit developing entirely longitudinally, through which the loose material exits by force of gravity.

At the outlet slit, the external lateral wall of the container hopper 3 is joined to a slim horizontal shelf 31, which develops along the whole length of the hopper 3 itself.

Numerous separator walls 32 are fixed to the lower surface of the horizontal shelf 31, each of which walls 32 is constituted by a rectangular vertical sheet orientated perpendicular to the transversal axis A of the container hopper 3.

It is stressed that the horizontal shelf 31 is not fundamental, and that the separator wall 32 might be fixed to the hopper 3 in other ways.

The separator walls 32 are identical and parallel to one another, and are equidistant along a parallel direction to the transversal axis A and separated from one another by a constant step, preferably comprised between 2 and 8 mm, for example 2.5 mm.

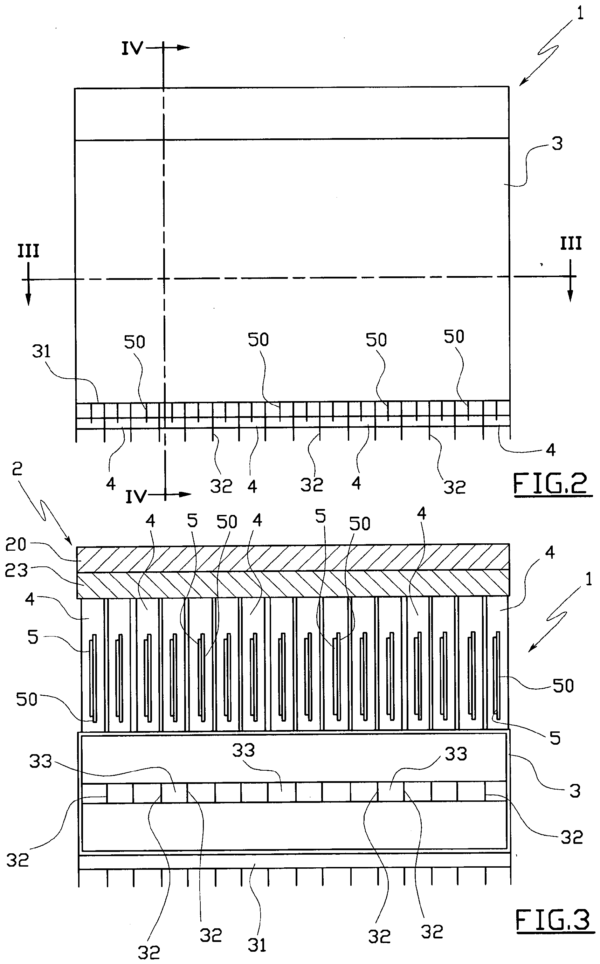

As illustrated in figure 3, the separator walls 32 cross the outlet slit of the container hopper 3, subdividing it in plan view into a plurality of distinct discharging mouths 33, from which the loose material can freely exit.

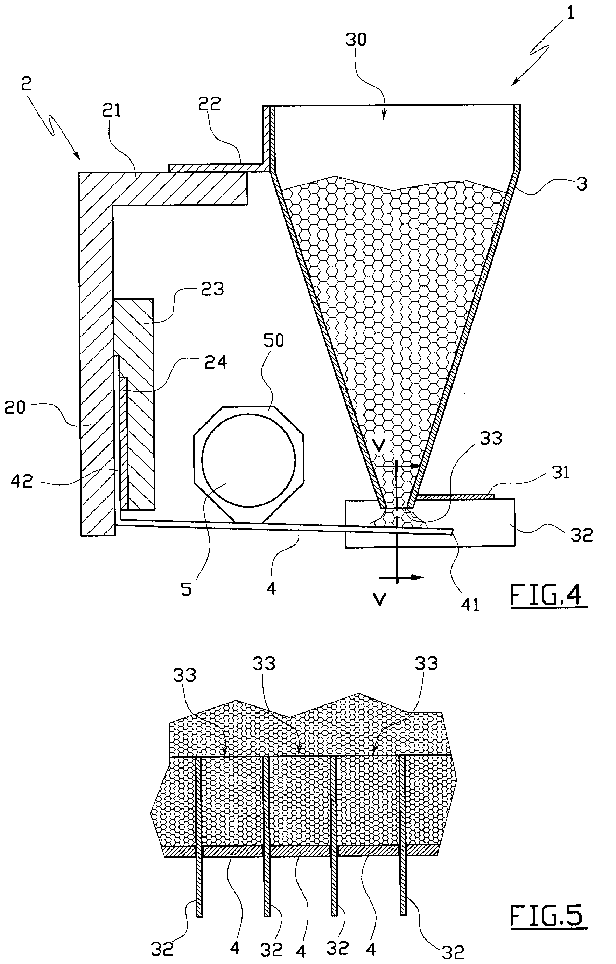

Thus the discharge mouths 33 are identical to one another and are reciprocally aligned along a parallel direction to the transversal axis A. As illustrated in figures 4 and 5, a distribution element is interposed between each consecutive pair of separator walls 32, which distribution element is in the illustrated example a thin elongate plate 4 extending below a relative discharge mouth 33.

Each plate 4 is substantially as wide as the distance which separates the separator walls 32, with respect to which it is free to oscillate in a vertical direction.

Each plate 4 is further located at a lower height with respect to the discharge mouth 33, from which it is distanced by a small amount, preferably comprised between 0.2. and 1 cm.

The small difference in height enables the loose material contained in the hopper 3 to freely exit from the relative discharge mouth 33, and to accumulate on the underlying plate 4, where it is laterally contained by the two lateral separator walls 32.

Each plate 4 is projecting fixed to the vertical upright 20 of the support structure 2, and is slightly inclined with respect to a hypothetical horizontal plane, such as to define a sliding direction for the material towards the free end 41 which advances beyond the discharge mouth 33.

The inclination is selected such that the material exiting the discharge mouth 33 accumulates on the sheet, without being able to slide downwards by simple force of gravity.

The inclination of the plate 4 is comprised between 0° and 10°.

In the non-limiting example illustrated in the figures of the drawing, each plate 4 is defined by a wing of a thin bent plate, substantially L-shaped, a second wing 42 of which is vertically orientated and is solidly blocked between the lateral flank of the vertical upright 20 of the support structure 2 and a blocking plate 23.

The blocking plate 23 is directly fixed to the upright 20, for example by means of one or more fastening screws, and is destined contemporaneously to block all the L-plates mounted on the device 1.

As illustrated in figure 4, a thin layer 24 of shock-absorbing material, for example rubber, is interposed between the second fold 42 of the L-shaped plate and the blocking plate 23, which thin layer 24 prevents the vibrations of the plate 4 from being transmitted to the whole support structure 2.

Each plate 4 is associated to an electromechanical transducer 5, in the example a disc made of a piezoelectric material, which is fixed coplanarly on a slim metal resonating plate 50 oriented parallel to the separator walls 32 and fixed in an intermediate tract of the plate 4, between the joining points and the discharge mouth 33.

Alternatively the piezoelectric transducer 5 might be directly fixed on the plate 4, without interposing the resonating plate 50.

The piezoelectric transducer 5 is connected by usual electrical contacts to a tension generator, which is in turn commanded by a special electronic panel programmed to selectively supply the transducer 5, with the aim of inducing a vibrating of the resonating plate 50 and thus the plate 4.

The electrical contacts, the tension generator and the electronic control panel are not illustrated as they are of widely-known type and usual in the sector. The vibration of the plate 4 causes the sliding of the loose material towards the edge of the free end 41, from which the material falls by force of gravity, for example in order to deposit on an underlying surface.

As the material gradually slides onto the plate 4 and falls from the free end edge 41, further material exits from the discharge mouth 33 of the container hopper 3 and accumulates on the plate 4, such that the flow of dispensed material is continuous and uninterrupted.

When the piezoelectric transducer 5 is deactivated, the sliding of the material onto the plate 4 also instantaneously ceases, and thus also its falling from the free end 41 is sharply halted. The flow exiting from the container hopper 3 is interrupted when, after stopping of the vibration, the material accumulated on the plate 4 occupies the whole difference in level between the plate 4 and the discharge mouth 33.

When the piezoelectric transducer 5 is newly activated, the sliding of the material on the plate 4, and thus the falling thereof from the free end 41, recommences equally briskly.

Thus, the transitory stages of starting and halting of the dispensing of the loose material are almost instantaneous, thus ensuring high precision levels. It is worthy of note that the plates 4, with the relative piezoelectric transducer 5 and the resonating plate 50, constitute a number of distinct dispensing organs for the loose material, which act in different positions along the direction of the transversal axis A of the container hopper 3, and can be activated independently of each other such as to obtain a high level of control of the process and greater freedom of dispensing of the material.

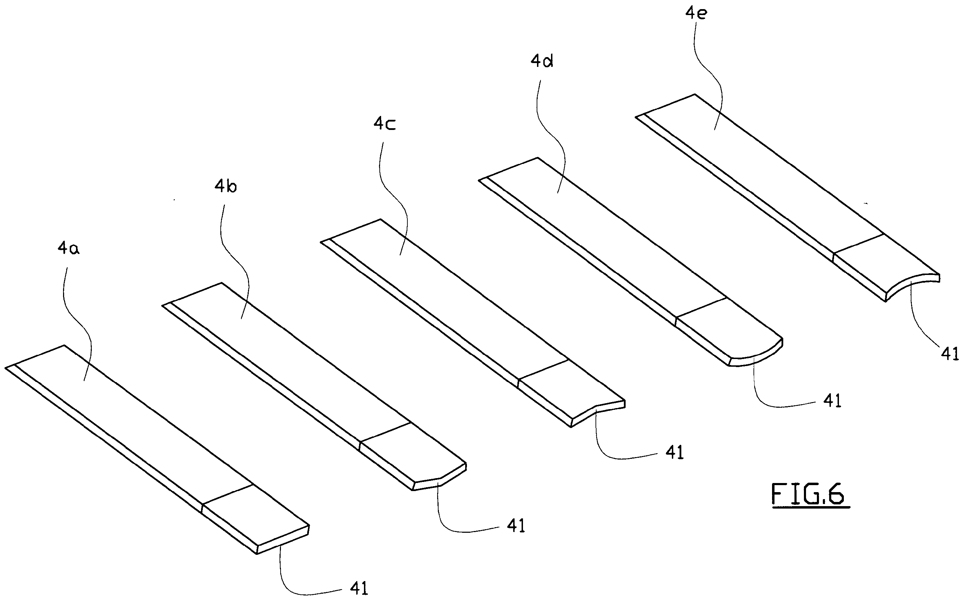

As illustrated in figure 6, the plates 4 can be of different shapes in order to obtain a better dispensing of the loose material on the underlying surfaces, i.e. in order to obtain different decorative effects.

The plate 4a exhibits, for example, a perfectly flat and squared end 41, which produces a substantially uniform dispensing over its entire width.

The plates 4b and 4d both exhibit an end 41 which is slightly concave, with the concavity facing upwards, where the end 41 of the plate 4b exhibits a wedge-shaped section, while the end of the plate 4d is rounded. Both these plates 4b and 4d are destined to concentrate the loose material at the centre, such as to deposit strips of rather narrow and defined material on the surface to be treated.

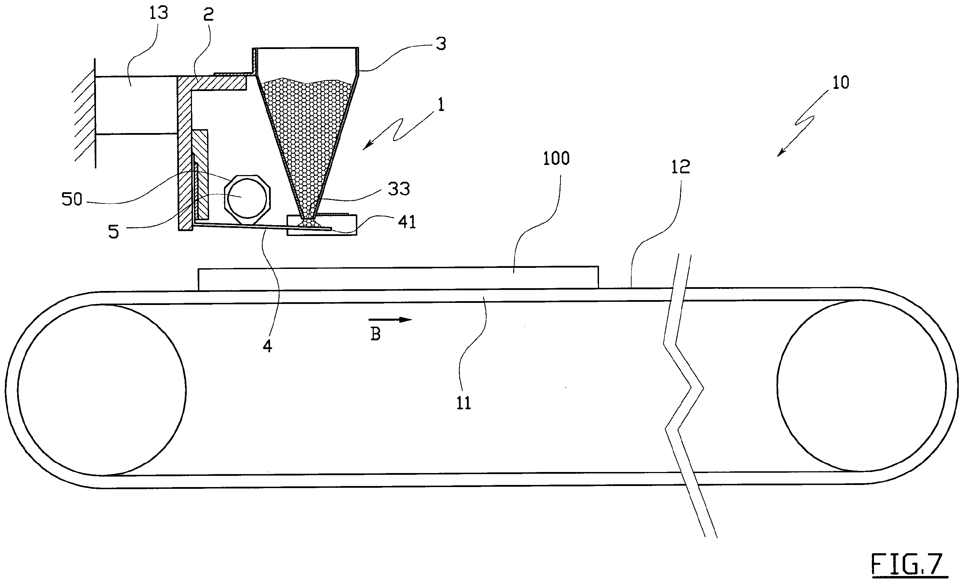

Plates 4c and 4e exhibit an end 41 which is slightly concave but with the concavity facing downwards, the ends 41 of the plate 4c being wedge-shaped, while that of the plate 4e is convex. These plates 4c and 4e tend to distribute the loose material along the flanks, such as to deposit rather wide and nuanced strips of material on the surface to be treated, or in order to compensate for the friction of the powder with the lateral separator walls 32. Figure 7 schematically illustrates an apparatus 10 for the decoration of ceramic products, and in particular for the decoration of ceramic slabs such as tiles. The apparatus shown in figure 7 does not form part of the claimed invention.

The apparatus 10 comprises a conveyor belt 11, which makes available a rest surface 12 for receiving the semi-finished ceramic materials 100 which will constitute the tiles.

According to the type of loose material selected for the decoration, the semi-finished ceramic materials 100 can be simple layers of soft ceramic powders, not yet pressed, ceramic slabs pressed and not dried, or can be ceramic slabs that have already been pressed and dried, which will thereafter be subjected to the glazing firing.

The apparatus 10 further comprises a dispensing device 1 of the previously-described type, which surmounts the rest surface 12 and is stably fixed to a fixed structure 13 with respect to the conveyor belt 11.

In this way, the sliding of the conveyor belt 11 causes a reciprocal movement between the semi-finished articles 100 which advance solidly with the rest surface 12 and the dispensing device 1 which remains stationary in a longitudinal direction B.

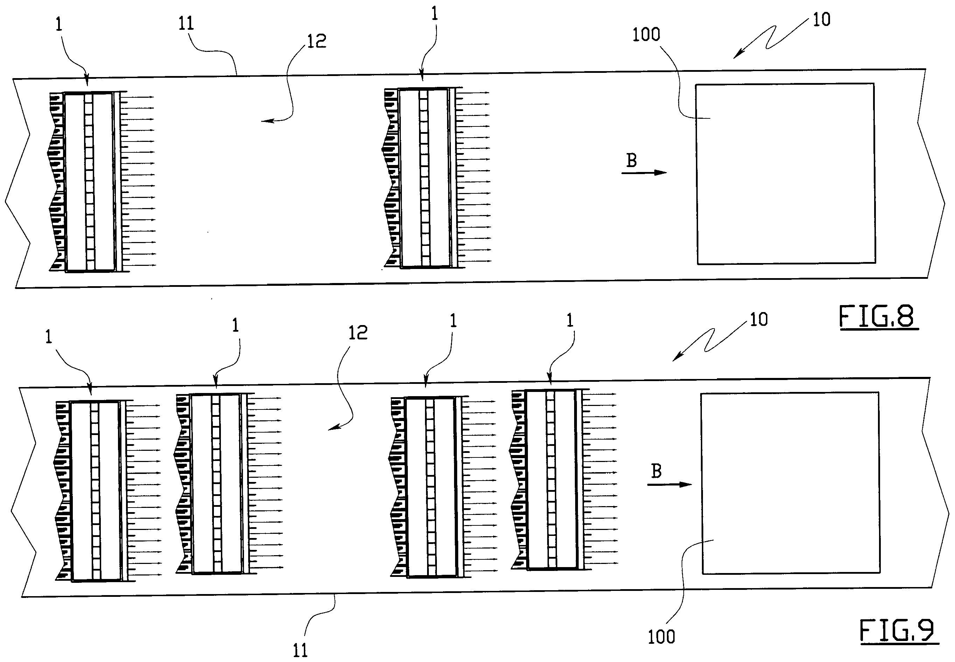

During this reciprocal movement, the piezoelectric transducers 5 can be operated when the semi-finished articles 100 pass below the dispensing device 1, such that the loose material slides on one or more of the plates 4 and falls from the relative end edges 41, depositing in the form of continuous strips (denoted with the arrows of figures 8 and 9) on the upper surface of the semi-finished articles 100 in transit.

In this way, by specially programming the activating times of the piezoelectric transducers 5 and thus the dispensing of the material, various designs and/or decorative effects can be obtained on the semi-finished articles.

In particular, in order to increase the range of decorations that can be obtained, means (not illustrated) can be associated to the dispensing device 1 for moving the device 1 in the sliding direction B.

As illustrated in figure 8, the apparatus 10 can be provided with a plurality of dispensing devices 1, which are arranged in series along the sliding direction B, such as to act in sequence on the advancing semi-finished products 100. In particular, it is preferable that the container hoppers 3 of these dispensing devices 1 in series be filled with materials having different coloration, with the aim of obtaining multi-coloured designs and/or decorations on the tiles 100. In the illustrated examples, the dispensing devices 1 are two in number, but obviously they could be installed in greater numbers, for example the same as the number of colours to be dispensed.

The apparatus 10 illustrated in figure 9 comprises, for each colour to be dispensed, a group of two distinct dispensing devices 1, which are reciprocally arranged in series and are further staggered in a transversal direction with respect to the sliding direction B.

In this way, each of the devices 1 deposits on the semi-finished article 100 strips of loose material which are alternated with respect to the strips deposited by the other dispensing device 1 of the group 1, thus obtaining a greater resolution, i.e. a greater definition of the designs that are reproducible on the semi-finished article 100.

In particular, the dispensing devices 1 of each group are staggered in a transversal direction by a quantity which is a half of the step separating the respective plates 4.

Naturally each group might comprise a greater number of dispensing devices 1 in series, for example three devices staggered by a third of the step, four devices staggered by a quarter of the step, and so on, thus obtaining a progressively greater level of definition in the reproducible design.

In this case too it is possible to predisposed more than two groups of dispensing devices 1 in series, for example on the basis of the number of colours to be dispensed.

As has been observed herein above, each plate 4 represents a single dispensing organ of loose material, which has to be activatable independently of the others, such as to obtain a high level of control of the process and a greater precision in the dispensing of the material.

During tests it has however been observed that when materials having a rather fine granulometry have been dispensed, the particles of the material can get blocked in the slim hollow spaces which for constructional reasons are inevitably present between each plate 4 and the separator walls 32 adjacent thereto (see figure 5).

It occurs that when a single plate 4 is set in vibration, the granules trapped in the hollow spaces transmit the vibration to the relative separator walls 32, which in turn cause the vibration of the adjacent plates 4, even though the adjacent plates 4 have not been activated.

There is therefore an undesirabe fall of material from the adjacent plates 4, which causes problems in the distribution of the material on the semi-finished article 100 and in the definition of the graphic designs that can be realised thereon.

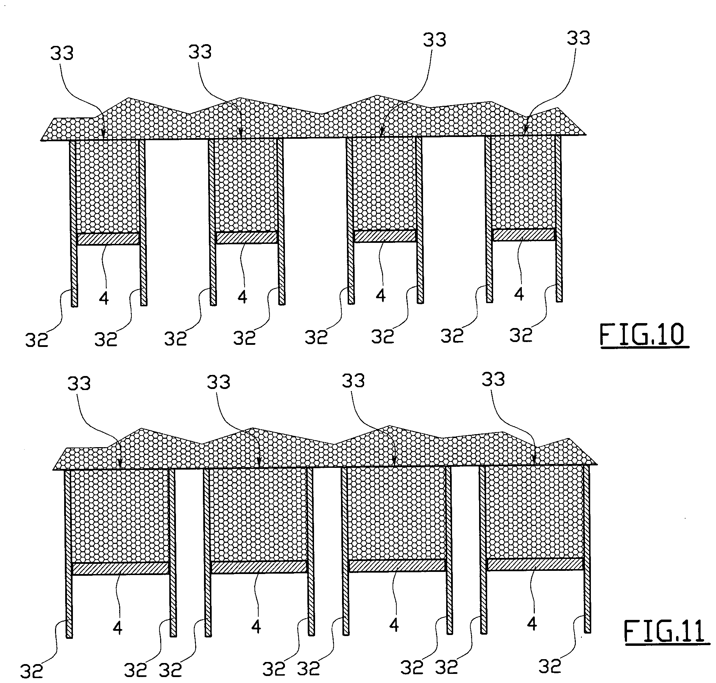

To obviate this drawback the solution illustrated in figure 10 is proposed, i.e. removing every other plate 4 from the dispensing device 1.

This effectively means providing a dispensing device 1 like before in which the plates 4 however are alternated with the separator walls 32, such that each separator wall 32 is adjacent to a single plate 4.

In this way, the plates 4 are reciprocally separated by at least two consecutive separator walls 32 between which there is an empty space. Obviously the discharge mouths 33 of the hopper 3 which are singly delimited by two separator walls 32 among which there is no plate 4 will be closed in order to not allow the material to fall.

This solution solves the above-described problem but leads to a lesser printing resolution on the part of the single dispensing devices 1, i.e. a poorer definition on of the designs that can be reproducible on the semi-finished article 100, as the loose material falling onto the plate 4 on the upper surface of the semi-finished article 100 of the continuous strips which are distanced from one another.

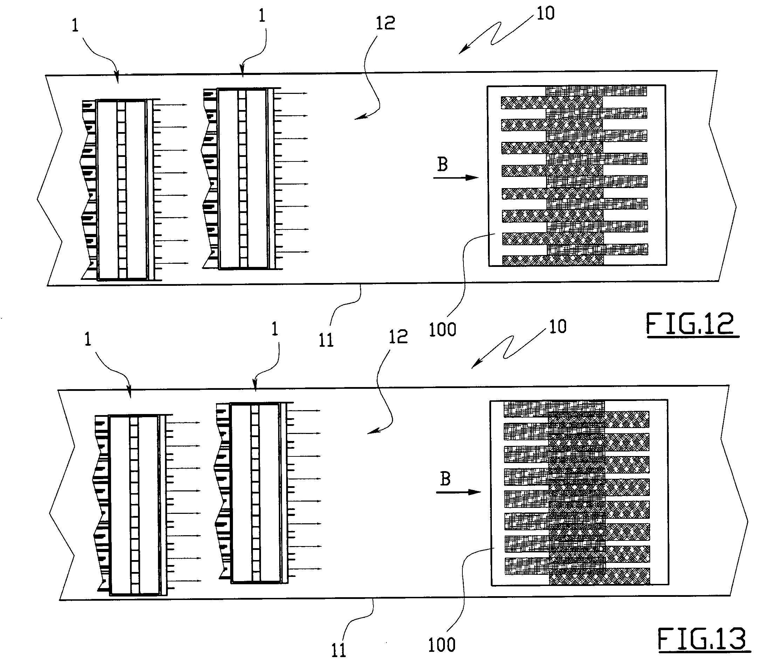

For this reason the dispensing device 1 is preferably used modified according to the system architecture illustrated in figure 12, which is substantially the same as that of figure 9.

In practice, for each colour to be dispensed, a group of at least two distinct modified dispensing devices 1 are provided, which are arranged in series with respect to the sliding direction B of the conveyor belt 11, and are staggered in a transversal direction of a quantity which is half the step that separates the respective plates 4.

In this way, the second dispensing device is destined to deposit strips of loose material on the semi-finished article 100, which strips are alternated with the strips deposited by the first dispensing device 1, in order to cover zones left empty by the first dispensing device 1 and vice versa.

A variant of the above solution is illustrated in figure 11, in which the width of the plates 4 is increased and the distance between the separator walls 32 with no plate 4 located between them correspondingly reduced, i.e. a reduction being made in the width of the empty space separating them. Naturally the width of the plates 4 could also be kept constant, and the distance between the separator walls 32 between which no plate 4 is included reduced, consequently increasing the number of plates 4.

In both cases, a dispensing device 1 is made available in which the width of the plates 4 is greater than the width of the empty spaces separating them.

In this way, the width of the zones of the semi-finished article 100 which remain empty between the strips of material dispensed by the plates 4 is reduced, and the print definition of each single dispensing device 1 is increased.

Further, the width of the plates 4 is greater than half the step separating them, such that when two dispensing devices 1 are arranged in series as illustrated in figure 13, staggered by an amount which is equal to half the step, the strip of material dispensed by the first device 1 is at least partly superposed on those dispensed by the second device 1, thus guaranteeing a more uniform distribution of the material on the semi-finished article 100. Naturally a substantially similar effect can be obtained by arranging in series a dispensing device 1 such as the one in figure 10 and a dispensing device 1 such as the one in figure 11, staggered by half a step.

It is further specified that although the apparatus 10 described herein are provided with a conveyor belt 11 for advancing the semi-finished articles 100 while the dispensing devices 1 remain stationary, it is equally possible to install the dispensing devices 1 on a mobile carriage which can be activated to slide in direction B with respect to a fixed support plane, on which the semi-finished articles 100 rest immobile. For example, the dispensing devices 1 might be installed on a usual loading carriage for a ceramic press, such as to distribute the loose material directly on the ceramic base powders internally of the forming cell.

## Claims

1. A ceramic products manufacturing apparatus for controlled depositing of solid loose material on surfaces to be treated (100), comprising:
• at least a dispensing device for controlled dispensing of a solid loose material, wherein the dispensing device comprises:
- a container hopper (3) of the material provided with a plurality of discharge mouths (33),
- a plurality of distribution elements (4), each of which is located at a distance below a relative discharge mouth (33) such that material exiting each discharge mouth (33) can accumulate thereon, wherein each distribution element (4) is inclined with respect to a horizontal plane, such as to define a sliding direction of the material towards at least a falling edge (41) of the distribution element (4),
- a plurality of vibration means (5, 50), each of which is associated to a respective distribution element (4) for vibrating said distribution element (4), such that the accumulated material slides on the distribution element (4) up until the material falls from the falling edge (41) thereof, and
- electronic control means for activating each vibration means (5, 50) independently of one other; wherein the apparatus further comprises:
• movement means (11) for realising a relative movement in at least a reciprocal sliding direction (B) between the dispensing device (1) and an underlying surface to be treated (100) on which the material is to be deposited;
**characterized in that** the movement means (11) comprise a sliding carriage which bears the dispensing device (1) and is destined to slide with respect to a fixed support plane which bears the surfaces to be treated (100) and **in that** each of the distribution elements (4) is inclined of an inclination comprised between 0° and 10° with respect to the horizontal plane.

2. The apparatus of claim 1, **characterised in that** each distribution element (4) is interposed between two lateral separator walls (32) destined to laterally contain the accumulated material thereon and to guide the material towards the falling edge (41).

3. The apparatus of claim 1, **characterised in that** each distribution element (4) is fixed projectingly to a support structure (2), the vibrator means (5, 50) being connected to an intermediate tract of the distribution element (4).

4. The apparatus of claim 3, **characterised in that** the vibrator means (5, 50) comprise an electromechanical transducer (5).

5. The apparatus of claim 4, **characterised in that** each electromechanical transducer (5) is connected to the respective distribution element (4) by means of a plate (50), which is fixed to the distribution element (4).

6. The apparatus of claim 1, **characterised in that** each distribution element is conformed as a plate (4).

7. The apparatus of claim 1, **characterised in that** the distribution elements (4) are separated by separator walls (32), which on each distribution element (4) laterally contain the material exiting from the relative distribution mouth (33) of the hopper (3), and guide the material towards the relative falling edge (41).

8. The apparatus of claim 7, **characterised in that** the distribution elements (4) are reciprocally separated by at least two separator walls (32) between which an empty space is afforded.

9. The apparatus of claim 8, **characterised in that** a width of the empty space is less than a width of the distribution elements (4).

10. The apparatus of claims 1, **characterised in that** the falling edge is at a flat end (41) of the respective distribution element (4).

11. The apparatus of claim 1, **characterised in that** the falling edge is at a concave end (41) of the respective distribution element (4), with a concavity thereof facing downwards.

12. The apparatus of claim 1, comprising a cell of a press provided with the fixed support plane.

13. The apparatus of claim 1, **characterised in that** it comprises a plurality of the dispensing devices (1), which are arranged in succession along the sliding direction (B) defined by the movement means (11).

14. The apparatus of claim 13, **characterised in that** the dispensing devices (1) in series are reciprocally staggered in a transversal direction with respect to the sliding direction (B).

15. The apparatus of claim 13, **characterised in that** the container hopper (3) of each dispensing device (1) contains a loose material of a different colour to the other dispensing devices (1).

16. Use of an apparatus according to any one of claims from 1 to 15 for the production of ceramic products.

## Patentansprüche

1. Keramikprodukt-Herstellungsvorrichtung zum kontrollierten Aufbringen von festem Lockermaterial auf zu behandelnden Oberflächen (100), umfassend:
• mindestens eine Ausgabevorrichtung für ein kontrolliertes Ausgeben eines festen Lockermaterials, wobei die Ausgabevorrichtung Folgendes umfasst:
- einen Behältertrichter (3) des Materials, der mit einer Vielzahl von Auslassöffnungen (33) versehen ist,
- eine Vielzahl von Verteilungselementen (4), von denen sich jedes in einem Abstand unterhalb einer relativen Auslassöffnung (33) befindet, sodass sich darauf Material ansammeln kann, das aus jeder Auslassöffnung (33) austritt, wobei jedes Verteilungselement (4) in Bezug auf eine horizontale Ebene geneigt ist, um eine Gleitrichtung des Materials zu mindestens einer Fallkante (41) des Verteilungselements (4) zu definieren,
- eine Vielzahl von Vibrationsmitteln (5, 50), von denen jedes mit einem jeweiligen Verteilungselement (4) zum Vibrieren des Verteilungselements (4) assoziiert ist, sodass das angesammelte Material auf dem Verteilungselement (4) nach oben gleitet, bis das Material von der Fallkante (41) davon fällt, und
- elektronische Steuermittel zum Aktivieren von jeder Vibrationseinrichtung (5, 50) unabhängig voneinander; wobei die Vorrichtung ferner Folgendes umfasst:
• Bewegungsmittel (11) zum Durchführen einer relativen Bewegung in mindestens einer wechselwirkenden Gleitrichtung (B) zwischen der Ausgabevorrichtung (1) und einer darunterliegenden, zu behandelnden Oberfläche (100), auf die das Material aufgebracht werden soll;
**dadurch gekennzeichnet, dass** die Bewegungsmittel (11) einen Gleitschlitten umfassen, der die Ausgabevorrichtung (1) trägt und dazu bestimmt ist, in Bezug auf eine stationäre Stützebene zu gleiten, die die zu behandelnden Oberflächen (100) trägt, und dass jedes der Verteilungselemente (4) mit einer Neigung zwischen 0° und 10° in Bezug auf die horizontale Ebene geneigt ist.

2. Vorrichtung nach Anspruch 1, **dadurch gekennzeichnet, dass** jedes Verteilungselement (4) zwischen zwei seitlichen Trennwänden (32) zwischengestellt ist, die dazu bestimmt sind, das darauf angesammelte Material seitlich einzudämmen und das Material zu der Fallkante (41) zu führen.

3. Vorrichtung nach Anspruch 1, **dadurch gekennzeichnet, dass** jedes Verteilungselement (4) vorstehend an einer Tragkonstruktion (2) befestigt ist, wobei die Vibrationsmittel (5, 50) mit einem Mittelteil des Verteilungselements (4) verbunden sind.

4. Vorrichtung nach Anspruch 3, **dadurch gekennzeichnet, dass** die Vibrationsmittel (5, 50) einen elektromechanischen Messgeber (5) umfassen.

5. Vorrichtung nach Anspruch 4, **dadurch gekennzeichnet, dass** jeder elektromechanische Messgeber (5) mit dem jeweiligen Verteilungselement (4) mittels einer Platte (50) verbunden ist, die an dem Verteilungselement (4) befestigt ist.

6. Vorrichtung nach Anspruch 1, **dadurch gekennzeichnet, dass** jedes Verteilungselement als Platte (4) ausgebildet ist.

7. Vorrichtung nach Anspruch 1, **dadurch gekennzeichnet, dass** die Verteilungselemente (4) durch Trennwände (32) getrennt sind, die an jedem Verteilungselement (4) das aus der relativen Verteilungsöffnung (33) des Trichters (3) austretende Material seitlich eindämmen und das Material zu der relativen Fallkante (41) führen.

8. Vorrichtung nach Anspruch 7, **dadurch gekennzeichnet, dass** die Verteilungselemente (4) durch mindestens zwei Trennwände (32), zwischen denen ein Freiraum erzeugt wird, wechselwirkend getrennt sind.

9. Vorrichtung nach Anspruch 8, **dadurch gekennzeichnet, dass** eine Breite des Freiraums kleiner ist als eine Breite der Verteilungselemente (4).

10. Vorrichtung nach Anspruch 1, **dadurch gekennzeichnet, dass** die Fallkante an einem flachen Ende (41) des jeweiligen Verteilungselements (4) ist.

11. Vorrichtung nach Anspruch 1, **dadurch gekennzeichnet, dass** die Fallkante an einem konkaven Ende (41) des jeweiligen Verteilungselements (4) ist, wobei eine Konkavität davon nach unten zeigt.

12. Vorrichtung nach Anspruch 1, umfassend eine Zelle einer Presse, die mit der stationären Stützebene versehen ist.

13. Vorrichtung nach Anspruch 1, **dadurch gekennzeichnet, dass** sie eine Vielzahl der Ausgabevorrichtungen (1) umfasst, die nacheinander entlang der Gleitrichtung (B) angeordnet sind, die durch die Bewegungsmittel (11) definiert ist.

14. Vorrichtung nach Anspruch 13, **dadurch gekennzeichnet, dass** die in Reihe befindlichen Ausgabevorrichtungen (1) in Querrichtung in Bezug auf die Gleitrichtung (B) wechselwirkend versetzt sind.

15. Vorrichtung nach Anspruch 13, **dadurch gekennzeichnet, dass** der Behältertrichter (3) von jeder Ausgabevorrichtung (1) ein Lockermaterial mit einer anderen Farbe als die anderen Ausgabevorrichtungen (1) enthält.

16. Verwendung einer Vorrichtung nach einem der Ansprüche von 1 bis 15 für die Herstellung von Keramikprodukten.

## Revendications

1. Appareil de fabrication de produits en céramique pour le dépôt contrôlé de matières solides en vrac sur des surfaces à traiter (100), comprenant :
• au moins un dispositif de distribution pour la distribution contrôlée d'une matière solide en vrac, dans lequel le dispositif de distribution comprend :
- un récipient à trémie (3) pour la matière doté d'une pluralité d'orifices de décharge (33),
- une pluralité d'éléments de distribution (4), chacun étant situé à distance sous un orifice de décharge (33) relatif de sorte que la matière sortant de chaque orifice de décharge (33) puisse s'y accumuler, dans lequel chaque élément de distribution (4) est incliné par rapport à un plan horizontal, afin de définir une direction de glissement de la matière vers au moins un flanc descendant (41) de l'élément de distribution (4),
- une pluralité de moyens de vibration (5, 50), chacun étant associé à un élément de distribution (4) respectif pour la vibration dudit élément de distribution (4), de sorte que la matière accumulée glisse vers le haut sur l'élément de distribution (4) jusqu'à ce que la matière tombe du flanc descendant (41) de ce dernier, et
- moyens de contrôle électroniques pour l'activation de chaque moyen de vibration (5, 50) indépendamment les uns des autres ; dans lequel l'appareil comprend également :
• des moyens de mise en mouvement (11) pour la réalisation d'un mouvement relatif dans au moins une direction de glissement réciproque (B) entre le dispositif de distribution (1) et une surface sous-jacente à traiter (100) sur laquelle la matière doit être déposée ;
**caractérisé en ce que** les moyens de mise en mouvement (11) comprennent un support coulissant qui supporte le dispositif de distribution (1) et est destiné à coulisser par rapport à un plan de support fixe qui supporte les surfaces à traiter (100) et **en ce que** chaque élément de distribution (4) est incliné selon une inclinaison comprise entre 0° et 10° par rapport au plan horizontal.

2. Appareil selon la revendication 1, **caractérisé en ce que** chaque élément de distribution (4) est interposé entre deux parois de séparation latérales (32) destinées à latéralement contenir la matière accumulée sur ces derniers et à guider la matière vers le flanc descendant (41).

3. Appareil selon la revendication 1, **caractérisé en ce que** chaque élément de distribution (4) est fixé en saillie à une structure de support (2), les moyens de vibration (5, 50) étant connectés à un conduit intermédiaire de l'élément de distribution (4).

4. Appareil selon la revendication 3, **caractérisé en ce que** les moyens de vibration (5, 50) comprennent un transducteur électromécanique (5).

5. Appareil selon la revendication 4, **caractérisé en ce que** chaque transducteur électromécanique (5) est connecté à l'élément de distribution respectif (4) au moyen d'une plaque (50), qui est fixée à l'élément de distribution (4).

6. Appareil selon la revendication 1, **caractérisé en ce que** chaque élément de distribution est en forme de plaque (4).

7. Appareil selon la revendication 1, **caractérisé en ce que** les éléments de distribution (4) sont séparés par des parois de séparation (32), qui sur chaque élément de distribution (4) contiennent latéralement la matière sortant de l'orifice de distribution (33) relatif de la trémie (3) et guident la matière vers le flanc descendant (41) relatif.

8. Appareil selon la revendication 7, **caractérisé en ce que** les éléments de distribution (4) sont réciproquement séparés par au moins deux parois de séparation (32) entre lesquelles un espace vide est créé.

9. Appareil selon la revendication 8, **caractérisé en ce qu'**une largeur de l'espace vide est inférieure à une largeur des éléments de distribution (4).

10. Appareil selon la revendication 1, **caractérisé en ce que** le flanc descendant est à une extrémité plate (41) de l'élément de distribution respectif (4).

11. Appareil selon la revendication 1, **caractérisé en ce que** le flanc descendant est à une extrémité concave (41) de l'élément de distribution (4) respectif, dont une concavité est orientée vers le bas.

12. Appareil selon la revendication 1, comprenant une cellule d'une presse dotée du plan de support fixe.

13. Appareil selon la revendication 1, **caractérisé en ce qu'**il comprend une pluralité des dispositifs de distribution (1), qui sont placés en série le long de la direction de glissement (B) définie par les moyens de mise en mouvement (11).

14. Appareil selon la revendication 13, **caractérisé en ce que** les dispositifs de distribution (1) en série sont réciproquement décalés dans une direction transversale par rapport à la direction de glissement (B).

15. Appareil selon la revendication 13, **caractérisé en ce que** le récipient à trémie (3) de chaque dispositif de distribution (1) contient une matière en vrac d'une couleur différente des autres dispositifs de distribution (1).

16. Utilisation d'un appareil selon l'une quelconque des revendications 1 à 15 pour la production de produits en céramique.
